# EUROPEAN PATENT APPLICATION

(11) **EP 2 357 737 A2**
(43) Date of publication of application: **17.08.2011**
(21) Application number: 09819404.6
(22) Date of filing: 09.10.2009
(51) Int. Cl.: H04B 10/08

(54) **FAULT LOCALIZATION METHOD AND FAULT LOCALIZATION DEVICE IN A PASSIVE OPTICAL NETWORK, AND PASSIVE OPTICAL NETWORK HAVING THE FAULT LOCALIZATION DEVICE**

(30) Priority: 09.10.2008 KR 20080099329
(71) Applicant: Korea Advanced Institute of Science and Technology, Daejeon 305-701 (KR)
(72) Inventor: LEE, Chang-Hee, Daejeon 305-345 (KR); LEE, Jong-Hoon, Daegu 701-300 (KR); CHOI, Ki-Man, Daegu 701-240 (KR); MUN, Sil-Gu, Daegu 702-769 (KR); MOON, Jung-Hyung, Pusan 617-020 (KR); LEE, Hoon-Keun, Kyungsangbukdo 712-786 (KR); KIM, Joon-Young, Kwangju 502-738 (KR); OH, Sang-Min, Pusan 612-030 (KR)
(74) Representative: Kudlek & Grunert Patentanwälte
(86) International application number: PCT/KR2009/005791
(87) International publication number: WO 2010/041897

(57) **Abstract**

The present invention discloses a fault localization method and a fault localization apparatus in a Passive Optical Network (PON) and a passive optical network having the same.

A fault localization method in PON according to the present invention comprises a) configuring an optical path of a remote node (RN) selectively by electric power being fed temporarily only when necessary, while the PON is regularly being operated as a passive network; and b) detecting a fault occurring on the selectively configured optical path by inserting a monitoring signal of an OTDR unit, which is positioned in a central office (CO), through the selectively configured optical path.

## Description

### Technical Field

The present invention relates to a fault localization method and a fault localization apparatus in a passive optical network (PON) and a PON having the same. More specifically, the present invention relates to a fault localization method and a fault localization apparatus in a PON and a PON having the same which configure an optical path of a specific distribution fiber selectively though remote control and detects a fault occurring on a feeder fiber or on a specific distribution fiber using a fault detecting device of an optical fiber, a typical example of which is an optical time-domain reflectometer (hereinafter refereed to "OTDR") through the selectively configured optical path.

### Background Art

It is required to monitor a fault which may occur on PON and to detect and heal rapidly the fault when it occurs in order to enhance reliability of the PON which accommodates demand for sharply increased bandwidth. PON being comprised of only passive elements from Central Office (CO) to subscribers is desirable to have a Point-to-Multipoint configuration in order to reduce the length of an optical fiber to be installed from CO to the subscribers and to commonly share a feeder fiber by the subscribers. Further, PON is largely classified as a Time Division Multiplexing PON (TDM-PON) and a Wavelength Division Multiplexing PON (WDM-PON) depending on a method of sharing an optical fiber.

An OTDR, which is typically a fault detecting device of an optical fiber to be used for detecting a fault occurring on an optical path, may detect not only any loss of the optical path but also a coupling position to a different optical link or an optical element, any defect and reflection, etc. on an optical path, and is now widely and commercially available. However, there is a difficulty to apply a commercially available OTDR in PON having a Point-to-Multipoint configuration which is comprised of only passive elements from CO to the subscribers.

More specifically, because signals with mutually different wavelengths assigned per a subscriber channel are divided by a WDM multiplexer/demultiplexer (WDM MUX/DEMUX) of Remote Node (RN) depending on subscriber wavelengths in case of a WDM-PON, it is required to use an OTDR having a tunable laser as a light source which may assign and measure a wavelength appropriate for (i.e., corresponding to) each subscriber path in order to find a fault on each distribution optical fiber from CO to the subscribers. However, generally such a tunable laser is high-priced and thus using a high-priced OTDR having a high-priced tunable laser is not desirable in the viewpoint of economic aspects.

Further, because a great loss to an OTDR monitoring signal occurs due to a fact that an optical power splitter (OPS) is necessarily to be used in RN and optical signals reflected and returned at respective distribution optical fibers of subscriber channels, i.e., at respective branches, are coupled to a feeder fiber through an OPS in case of TDM-PON, it is difficult to determine a certain optical path that a fault is returned from, even though such a fault is detected. Accordingly, various methods capable of making respective branches to have different response characteristics that are distinguishable from each other have been proposed in order to distinguish optical signals which are reflected and returned at the respective branches.

However, various methods for distinguishing optical signals being reflected and returned at the respective branches as described in detail above are methods for obtaining response signals distinguishable for given optical paths where a separate light source, and reflection elements or signal generators, being mutually distinguishable (i.e., having different response characteristics), are required to be provided per channel corresponding to respective branches. As a result, a fault detecting method used in TDM-PON makes a whole system complicated, and has low economic efficiency and no compatibility.

Accordingly, new fault detecting method and apparatus having compatibility and capable of detecting a fault of an optical path economically and efficiently are required in PON.

### Detailed Description

### Technical Problem

The object of the present invention is to solve the prior art problems, by providing a fault localization method and a fault localization apparatus and a passive optical network having the fault localization apparatus capable of monitoring a fault of a branched optical path regardless of the type of PON, while using monitoring technology of a known OTDR.

### Technical Solution

According to a first aspect of the present invention, the present invention provides a fault localization method in PON comprising a) configuring an optical path of a remote node (RN) selectively by electric power being fed temporarily only when necessary, while the PON is regularly being operated as a passive network; and b) detecting a fault occurring on the selectively configured optical path by inserting a monitoring signal of an OTDR unit, which is positioned in a central office (CO), through the selectively configured optical path.

According to a second aspect of the present invention, the present invention provides a fault localization apparatus in PON comprising a powering unit, being provided within CO, for temporarily providing electric power and control information of RN with the RN so as to configure an optical path of the RN selectively; an OTDR unit, being provided within the CO, for providing a monitoring signal for monitoring the optical path; a path switching device, being provided within the RN, for setting up the optical path so as for the monitoring signal to be coupled selectively to a plurality of distribution fibers; and a control unit for setting up the optical path of the RN to the path switching device by using the electric power and the control information.

According to a third aspect of the present invention, the present invention provides a fault localization apparatus in PON comprising a powering unit, being provided within CO, for temporarily providing optical power through an optical fiber and for providing electric power and control information of RN necessary for configuring an optical path of the RN selectively; an OTDR unit, being provided within the CO, for providing a monitoring signal for monitoring the optical path; a photovoltaic converter, being provided within the RN, for converting the optical power and the control information into an electrical signal; a path switching device, being provided within the RN, for setting up the optical path so as for the monitoring signal to be coupled selectively to a plurality of distribution fibers; and a control unit for setting up the optical path of the RN to the path switching device by using the electric power and the control information.

According to a fourth aspect of the present invention, the present invention provides a fault localization apparatus in PON comprising a powering unit, being provided within CO, for outputting optical power and control information of RN to the RN so as to configure an optical path of the RN selectively; an OTDR unit, being provided within the CO, for outputting a monitoring signal for monitoring the optical path; a first switch (switch 1) for decoupling or coupling the optical power and the control information outputted from the powering unit and the monitoring signal outputted from the OTDR unit selectively; a first WDM filter, being provided within the CO, for decoupling or coupling the optical power, the control information, and the monitoring signal to a feeder fiber; a second WDM filter, being provided within the RN, for decoupling or coupling the optical power, the control information, and the monitoring signal; a path switching device, being provided within the RN, for setting up the optical path so as to couple the monitoring signal decoupled by the second WDM filter selectively to a plurality of distribution fibers; a plurality of third WDM filters, being provided within the RN, for decoupling or coupling the monitoring signal selectively; a fifth WDM filter, being provided within the RN, for decoupling the optical power and the control information; a photovoltaic converter, being provided within the RN, for converting the optical power and the control information, which are decoupled through the fifth WDM filter, into an electrical signal; and a control unit, being provided within the RN, for designating a switch-over of the optical path of the RN by using the electrical signal.

According to a fifth aspect of the present invention, the present invention provides a fault localization apparatus in PON comprising an OTDR unit, being provided within CO, for outputting a monitoring signal for monitoring an optical path; an optical powering unit, being provided within the CO, for providing optical power and control information necessary for setting up the optical path regarding a self-healing function and the monitoring signal; a first WDM filter, being provided at a front end of a first switch (SW1), for connecting the optical power and the control information to the first switch (SW1); a second WDM filter, being provided between a first feeder fiber (FF-1) and a second switch within RN, for coupling or decoupling the optical power and the control information selectively; a third WDM filter, being provided between a second feeder fiber (FF-2) and the second switch within the RN, for coupling or decoupling the optical power and the control information selectively; a photovoltaic converter, being connected to the second WDM filter and the third WDM filter within the RN, for converting the optical power and the control information into an electrical signal; a path switching device, being connected to the second switch, for setting up the optical path so as to couple the monitoring signal decoupled by the second switch selectively to a plurality of distribution fibers; a plurality of third switches being provided between the path switching device and the plurality of distribution fibers within the RN; and a control unit, being connected to the photovoltaic converter, for providing electric power and control information necessary for operating the second switch, the plurality of third switches, and the path switching device by using the electrical signal.

According to a sixth aspect of the present invention, the present invention provides PON including a fault localization apparatus comprising CO including OLT, and a first WDM filter being connected to the OLT; RN including MUX/DEMUX, a second WDM filter being connected to a front end of the MUX/DEMUX, and a plurality of third WDM filters being connected to a back end of the MUX/DEMUX; a plurality of ONTs (ONT1,...,ONTn) being connected to the RN; a feeder fiber for connecting the OLT and the RN; and a plurality of distribution fibers (DF-1,...,DF-n) for connecting the RN and the plurality of ONTs (ONT1,...,ONTn), wherein the fault localization apparatus comprises a powering unit, being provided within the CO, for temporarily providing electric power and control information of the RN with the RN so as to configure an optical path of the RN selectively; an OTDR unit, being provided within the CO, for providing a monitoring signal for monitoring the optical path; a path switching device, being provided within the RN, for setting up the optical path so as for the monitoring signal to be coupled selectively to a plurality of distribution fibers; and a control unit for setting up the optical path of the RN to the path switching device by using the electric power and the control information.

According to a seventh aspect of the present invention, the present invention provides PON including a fault localization apparatus comprising CO including OLT, and a first WDM filter being connected to the OLT; RN including MUX/DEMUX, a second and a third WDM filters being connected selectively to a front end of the MUX/DEMUX, a second switch being connected respectively to the second and the third WDM filters, and a plurality of third WDM filters being connected to a back end of the MUX/DEMUX; a plurality of ONTs (ONT1,...,ONTn) being connected to the RN; a first and a second feeder fibers for connecting the OLT and the RN; a plurality of first and second distribution fibers (DF1-1,DF1-2; DF2-1,DF2-2..., DFn-1,DFn-2) for connecting the RN and the plurality of ONTs (ONT1,...,ONTn); and a plurality of fourth switches, being provided within the plurality of ONTs, for providing a connection to the plurality of first and second distribution fibers, wherein the fault localization apparatus comprises a powering unit, being provided within the CO, for temporarily providing optical power through an optical fiber and for providing electric power and control information of the RN necessary for configuring an optical path of the RN selectively; an OTDR unit, being provided within the CO, for providing a monitoring signal for monitoring the optical path; a photovoltaic converter, being provided within the RN, for converting the optical power and the control information into an electrical signal; a path switching device, being provided within the RN, for setting up the optical path so as for the monitoring signal to be coupled selectively to a plurality of distribution fibers; and a control unit for setting up the optical path of the RN to the path switching device by using the electric power and the control information.

According to a eighth aspect of the present invention, the present invention provides PON including a fault localization apparatus comprising CO including OLT, and a first WDM filter being connected to the OLT; RN including MUX/DEMUX, a second WDM filter being connected to a front end of the MUX/DEMUX, and a plurality of third WDM filters being connected to a back end of the MUX/DEMUX; a plurality of ONTs (ONT1,...,ONTn) being connected to the RN; a feeder fiber for connecting the OLT and the RN; and a plurality of distribution fibers (DF-1,...,DF-n) for connecting the RN and the plurality of ONTs (ONT1,...,ONTn), wherein the fault localization apparatus comprises a powering unit, being provided within the CO, for outputting optical power and control information of the RN to the RN so as to configure an optical path of the RN selectively; an OTDR unit, being provided within the CO, for outputting a monitoring signal for monitoring the optical path; a first switch (switch 1) for decoupling or coupling the optical power and the control information outputted from the powering unit and the monitoring signal outputted from the OTDR unit selectively; a first WDM filter, being provided within the CO, for decoupling or coupling the optical power, the control information, and the monitoring signal to the feeder fiber; a second WDM filter, being provided within the RN, for decoupling or coupling the optical power, the control information, and the monitoring signal; a path switching device, being provided within the RN, for setting up the optical path so as to couple the monitoring signal decoupled by the second WDM filter selectively to the plurality of distribution fibers; a plurality of third WDM filters, being provided within the RN, for decoupling or coupling the monitoring signal selectively; a fifth WDM filter, being provided within the RN, for decoupling the optical power and the control information; a photovoltaic converter, being provided within the RN, for converting the optical power and the control information, which are decoupled through the fifth WDM filter, into an electrical signal; and a control unit, being provided within the RN, for designating a switch-over of the optical path of the RN by using the electrical signal.

According to a ninth aspect of the present invention, the present invention provides PON including a fault localization apparatus comprising CO including OLT, a first WDM filter being connected to the OLT, and a first switch being connected to the first WDM filter; RN including MUX/DEMUX, a second and a third WDM filters being connected selectively to a front end of the MUX/DEMUX, a second switch being connected respectively to the second and the third WDM filters, and a plurality of third WDM filters being connected to a back end of the MUX/DEMUX; a plurality of ONTs (ONT1,...,ONTn) being connected to the RN; a first and a second feeder fibers for connecting the OLT and the RN; a plurality of first and second distribution fibers (DF1-1,DF1-2; DF2-1,DF2-2..., DFn-1,DFn-2) for connecting the RN and the plurality of ONTs (ONT1,...,ONTn); and a plurality of fourth switches, being provided within the plurality of ONTs, for providing a connection to the plurality of first and second distribution fibers, wherein the fault localization apparatus comprises an OTDR unit, being provided within the CO, for outputting a monitoring signal for monitoring an optical path; an optical powering unit, being provided within the CO, for providing optical power and control information necessary for setting up the optical path regarding a self-healing function and the monitoring signal; a first WDM filter, being provided at a front end of a first switch (SW1), for connecting the optical power and the control information to the first switch (SW1); a second WDM filter, being provided between the first feeder fiber (FF-1) and a second switch within the RN, for coupling or decoupling the optical power and the control information selectively; a third WDM filter, being provided between the second feeder fiber (FF-2) and the second switch within the RN, for coupling or decoupling the optical power and the control information selectively; a photovoltaic converter, being connected to the second WDM filter and the third WDM filter within the RN, for converting the optical power and the control information into an electrical signal; a path switching device, being connected to the second switch, for setting up the optical path so as to couple the monitoring signal decoupled by the second switch selectively to the plurality of first and second distribution fibers; a plurality of third switches being provided between the path switching device and the plurality of first and second distribution fibers within the RN; and a control unit, being connected to the photovoltaic converter, for providing electric power and control information necessary for operating the second switch, the third switch, and the path switching device by using the electrical signal.

### Advantageous Effect

According to the present invention, the following advantages are accomplished:

1. It is possible to re-configure an optical path of RN through operating electric power of RN temporarily and to detect a fault position of the optical path effectively through a specified subscriber optical path, which is set up, regardless of the type of a subscriber network.

2. It is possible to have advantages of operating a network with high reliability simultaneously with providing all the advantages of PON having high reliability and stability.

Further features and advantages of the present invention can be obviously understood with reference to the accompanying drawings where same or similar reference numerals indicate same components.

### Brief Description of the Drawings

Fig. 1 illustrates a view of explaining a fault localization method and a fault localization apparatus in PON according to an embodiment of the present invention.

Fig. 2 illustrates a view of explaining a fault localization method and a fault localization apparatus in PON according to another embodiment of the present invention.

### Mode for the Invention

Hereinafter, the present invention will be described in more detail with reference to the embodiments of the present invention and the appended drawings.

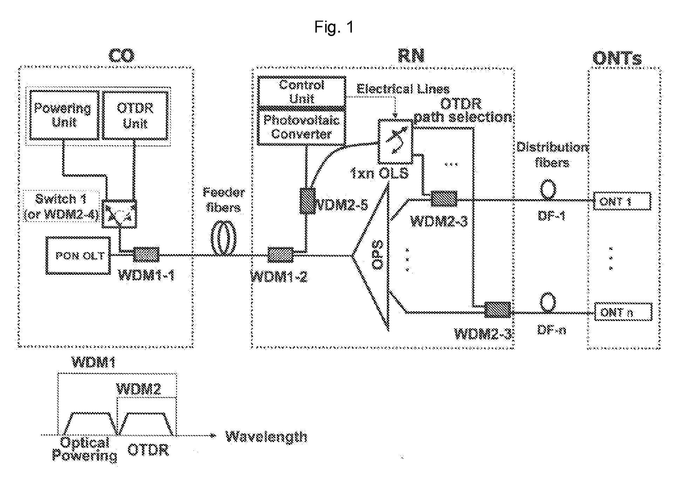

Fig. 1 illustrates a view of explaining a fault localization method and a fault localization apparatus in PON according to an embodiment of the present invention.

Referring to Fig. 1, a fault localization method and a fault localization apparatus in PON according to an embodiment of the present invention illustrate a method and an apparatus, which configure an optical path of a remote node selectively by electric power being fed temporarily from a remote place only when necessary, while the PON is regularly being operated as a passive network and detect a fault occurring on the selectively configured optical path by inserting a monitoring signal through the selectively configured optical path.

Specifically, a fault localization method and a fault localization apparatus according to the present invention, and a configuration of PON having the fault localization apparatus are illustrated. More specifically, a configuration of the PON comprises CO including OLT and a first WDM filter (WDM1-1); RN including MUX/DEMUX, a second WDM filter (WDM1-2) being connected to a front end of the MUX/DEMUX, and a plurality of third WDM filters (WDM2-3) being connected to a back end of the MUX/DEMUX; a plurality of ONTs (ONT1,...,ONTn) being connected to the RN; a feeder fiber for connecting the OLT and the RN; and a plurality of distribution fibers (DF-1,...,DF-n) for connecting the RN and the plurality of ONTs (ONT1,...,ONTn). Herein, the MUX/DEMUX is described illustratively as being embodied by an optical power splitter (OPS) which is used in TDM-PON. However, if the PON is embodied as WDM-PON, any skilled person in the art fully understand that the MUX/DEMUX may be embodied by an arrayed waveguide grating (AWG). In addition, the plurality of third WDM filters (WDM2-3) may be respectively embodied by an optical switch or an optical coupler.

In the PON configuration as described above, down-stream signals occurring from the OLT are transmitted to the plurality of ONTs (ONT1,...,ONTn), respectively, through the feeder fiber, the MUX/DEMUX in RN, and the plurality of distribution fibers (DF-1,...,DF-n). Likewise, up-stream signals occurring from the plurality of ONTs (ONT1,...,ONTn) are received at the OLT through the plurality of distribution fibers (DF-1,...,DF-n), the MUX/DEMUX in RN, and the feeder fiber. When a fault occurs in PON (for example, any optical link (the feeder fiber or a part or all of the plurality of distribution fibers (DF-1,...,DF-n)) is cut, or any other fault occurs), the OLT in CO is not able to detect a signal corresponding to a channel where a fault occurs among the up-stream signals being received at the OLT. In this case, the fault localization apparatus according to one embodiment of the present invention is characterized in configuring an optical path of RN selectively regarding a monitoring signal outputted from an OTDR unit, by using a powering unit and the OTDR unit provided within CO, in order to find a fault occurring on an optical link. Herein, it is desirable that the powering unit is embodied by a powering device capable of temporarily providing electric power necessary for re-configuring the optical path of RN.

Referring back to Fig. 1, the fault localization apparatus in PON according to one embodiment of the present invention comprises a powering unit, being provided within CO, for outputting optical power and control information of RN to the RN so as to configure an optical path of RN selectively; an OTDR unit, being provided within CO, for outputting a monitoring signal for monitoring the optical path; a first switch (switch 1) for decoupling or coupling the optical power and the control information outputted from the powering unit and the monitoring signal outputted from the OTDR unit selectively; a fifth WDM filter (WDM2-5), being provided within RN, for decoupling or coupling the monitoring signal; a path switching device, being provided within RN, for setting up the optical path so as to couple the monitoring signal, decoupled by the fifth WDM filter (WDM2-5), selectively to a plurality of distribution fibers; a photovoltaic converter, being provided within RN, for converting the optical power and the control information, decoupled by the fifth WDM filter (WDM2-5), into an electrical signal; and a control unit for controlling the path switching device so as to switch the optical path of RN by using the electrical signal. Herein, the path switching device may be embodied, for example, by a 1xn optical latching switch (OLS) having a latch characteristic (hereinafter being referred to "latch type switch"). Further, instead of the first switch (switch 1), a fourth WDM filer (WDM2-4), being connected to the powering unit and the OTDR unit, for decoupling or coupling the optical power and the control information outputted from the powering unit and the monitoring signal outputted from the OTDR unit from or to the first WDM filer (WDM1-1) may be alternatively used. Because the monitoring signal generated by the OTDR unit is returned to the OTDR unit through the set-up optical path, respective WDM filters couple or decouple the monitoring signal generated by the OTDR unit. Further, although the embodiment of the present invention describes that optical power is employed, it is possible that any type of energy (electric power, or electrical signal such as electrical energy, etc.) besides the optical power. In this case, the photovoltaic converter needs not to be used.

As described above, the control unit may switch the optical path of the latch type switch by using a converted electrical signal in the fault localization apparatus according to one embodiment of the preset invention. More specifically, the fault localization apparatus according to one embodiment of the present invention may be embodied by using an element having a latch characteristic as a desirable method in configuring and operating RN so as to set up a network through a remote control, while maintaining stability and reliability, which are advantages of PON, as they are. A latch type switch having such a latch characteristic sets up the optical path of RN by electric power being fed temporarily from the powering unit, and then maintains the components of PON in a powerless state under a condition that the set-up of the optical path of RN is completed.

More specifically, the powering unit is provided within CO, and is characterized in including an optical powering unit comprising a high power laser (not shown) for providing energy or optical power in order to set up the optical path of RN, and an encoding unit (not shown) for providing control information of RN. Herein, the optical powering unit transmits simultaneously the optical power generated by the high power laser and light including the control information of RN generated by the encoding unit (i.e., information for setting up the optical path to a distribution fiber corresponding to an ONT of a specific subscriber) (hereinafter referred to "control information") to RN. More specifically, the optical power and the control information outputted from the powering unit and the monitoring signal outputted from the OTDR unit are selectively connected through the first switch (switch 1) within CO or are constantly connected through the fourth WDM filer (WDM2-4), and are transmitted to the second WDM filter (WDM1-2) within RN through the first WDM filer (WDM1-1) and the feeder fiber. The down-stream signals being fed from the OLT within CO are also transmitted through the first WDM filer (WDM1-1). The second WDM filter (WDM1-2) passes the down-stream signals and transmits them to the OPS, and decouples the optical power and the control information, and the monitoring signal and transmits them to the fifth WDM filter (WDM2-5). The fifth WDM filter (WDM2-5) passes the transmitted optical power and the control information to the photovoltaic converter, and the photovoltaic converter converts the optical power and the control information into an electrical signal. Further, the fifth WDM filter (WDM 2-5) decouples the transmitted monitoring signal and transmits it to the latch type switch (1Xn OLS). The control unit can set up an optical path of the latch type switch (1Xn OLS) by using the electrical signal converted by the photovoltaic converter.

As described above, a desirable method in configuring and operating RN capable of setting up a network through remote control may be embodied in the present invention by using an element having a latch characteristic, while maintaining stability and reliability, which are advantages of PON, as they are. In particular, it is possible to set up the optical path of RN by optical power being fed temporarily by using a latch type switch having a latch characteristic in order to set up the optical path, and then maintain the components of PON in a powerless state under a condition that the set-up of the optical path of RN is completed

The optical power outputted from the high power laser of the optical power unit is fed through a wavelength band except the wavelength band which is used at a PON service. Simultaneously, the control information of RN outputted from the encoding unit of the optical powering unit is transmitted to RN along with the optical power. The transmitted control information of RN is decoupled through the second WDM filer (WDM1-2) and the fifth WDM filer (WDM 2-5), and then is converted into an electrical signal by the photovoltaic converter. The converted electrical signal is decoded at the control unit and is used in controlling and operating RN. More specifically, the control unit provides the optical power and the control information with the latch type switch (1xn OLS) in order to provide the optical path selectively to the plurality of distribution fibers (DF-1,...,DF-n) regarding the monitoring signal outputted from the OTDR unit by using the decoded electrical signal.

The specific configuration and operation of the powering unit and the RN as described above are described in detail in Korean Patent Application No. 10-2007-0100553 (hereinafter referred to "553 Application") filed on October 5, 2007 by the applicant of the present invention and entitled "Remote Node Configuration for Providing Upgraded Services in A Passive Optical Network and A Passive Network Having the Same", Korean Patent Application No. 10-2008-0064595 (hereinafter referred to "595 Application") filed on July 3, 2008 by the applicant of the present invention and entitled "Evolution Method and its Network Architecture with Self-Healing Characteristic for Next-Generation Access Networks), and a dissertation entitled "Remotely Configurable Remote Node for Next-Generation Access Networks," Jong-Hoon, Lee, et al., IEEE Photonics Technology Letters, Vol. 20, No. 11, Jun., 2008. The contents disclosed in 553 Application, 595 Application, and the dissertation of Jong-Hoon, Lee, et al., are incorporated by reference herein.

The OTDR unit within CO is a typical example of a device for detecting a fault on an optical fiber, and is a device for analyzing an optical signal which is reflected and returned at each connection point along a longitudinal length of the optical fiber by inserting an OTDR monitoring signal into the optical fiber, and for measuring the loss of the optical fiber, the distance to the connection point, and the damaged point of an optical path, etc. It is possible to detect a fault of any optical path by using the OTDR unit at CO through the optical path, which is set up by the powering unit, the control unit, and the path switching device of RN, regarding the OTDR monitoring signal.

Further, it is possible to perform the work of detecting a fault on an optical fiber where the fault occurs without stopping the provision of services, when using a wavelength band different from the wavelength band for transmitting down-stream signals and up-stream signals of PON (hereinafter referred to "wavelength band for transmitting PON data") and different from a wavelength band assigned to the optical powering unit (hereinafter referred to "wavelength band for optical powering") as a wavelength band of a light source being used for outputting the monitoring signal of the OTDR unit (hereinafter referred to "OTDR wavelength band").

The wavelength band for optical powering, the OTDR wavelength band, and the wavelength band for transmitting PON data described above respectively have different wavelength bands. In this case, the first WDM filter (WDM1-1) and the second WDM filter (WDM1-2) are characterized in having a function of decoupling or coupling the wavelength band for optical powering and the OTDR wavelength band from or to the wavelength band for transmitting PON data. Further, the plurality of third WDM filters (WDM2-3) being connected to the OPS within RN, the fourth WDM filter (WDM2-4) being provided within CO, and the fifth WDM filter (WDM2-5) being provided within RN as described above are respectively characterized in having a function of decoupling or coupling the OTDR wavelength band from or to the wavelength band for transmitting PON data and the wavelength band for optical powering.

Although an embodiment of Fig. 1 describes illustratively one 1xn optical switch in order to set up the optical path regarding the OTDR monitoring signal, any skilled person in the art may fully understand that it is possible to configure an optical path regarding the OTDR monitoring signal by any plurality of optical switches.

Although an embodiment of Fig. 1 describes illustratively a case that the PON is TDM-PON, any skilled person in the art may fully understand that it is possible to detect a fault on an optical path in both cases that the PON is WDM-PON or a subscriber network configuration where WDM-PON services and TDM-PON services are co-existing.

Further, although an embodiment of Fig. 1 describes illustratively one feeder fiber and a plurality of distribution fibers, it is obvious to configure so as to detect a fault occurring on all of the plurality of distribution fibers even in case that a plurality of feeder fibers is used and a part of the plurality of feeder fibers is disconnected.

Moreover, although an embodiment of Fig. 1 describes that an optical path of a specific subscriber is selectively configured regarding the OTDR monitoring signal by using the 1xn OLS and the plurality of third WDM filters (WDM2-3), it is possible to use switches, instead of using the respective third WDM filters (WDM2-3). Further, it is obvious that a separate optical path of a specific subscriber is selectively configured regarding the OTDR monitoring signal by using an optical coupler, etc., in addition to the respective third WDM filters (WDM2-3).

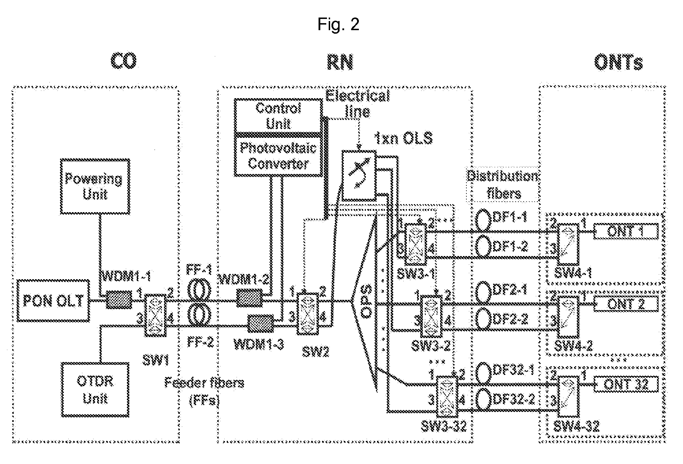

Fig. 2 illustrates a view of explaining a fault localization method and a fault localization apparatus in PON according to another embodiment of the present invention.

Referring to Fig. 2, a case of configuring an optical path of a specific subscriber selectively regarding the OTDR monitoring signal by using switches, instead of using the WDM filters used in an embodiment of Fig. 1, is illustrated.

More specifically, Fig. 2 illustrates an embodiment of TDM-PON regarding a method of providing a self-healing function by setting up an optical path through a control from a remote place described in 553 Application and 595 Application. When a fault occurs at any one of a first and a second feeder fibers (FF-1 ,FF2) or at a part of a plurality of first and second distribution fibers (DF1-1,DF1-2;DF2-1,DF2-2;...;DF32-1,D32-2) in TDM-PON illustrated in Fig. 2, it is possible to provide a self-healing path. More specifically, the TDM-PON illustrated in Fig. 2 has a first switch (SW1) within CO, a second switch (SW2) being provided at a front end of the OPS within RN and a plurality of third switches (SW3-1,SW3-2,...,SW3-32) being provided at a back end of the OPS, and a plurality of fourth switches (SW4-1,SW4-2,...,SW4-32) being provided within a plurality of subscribers (ONT1,ONT2,...,ONT32) and, when a fault occurs on a certain fiber, provides a self-healing function by re-configuring an optical path of the switch on an optical link where the fault occurs, through a remote control. In this case, if a 2x2 switch as illustrated in Fig. 2 is used, instead of the existing 1x2 switch (not shown) being used as the first switch (SW1) within CO of TDM-PON, the switch which has been used for a self-healing function may be used for configuring an optical path of the OTDR unit. More specifically, when a fault occurs on the first feeder fiber (FF-1), a first switch (SW1) being embodied by a 2x2 switch within CO for self-healing and a second switch (SW2) being embodied by a 2x2 switch are switched from a bar state into a cross state. Thus, services may be provided through a second feeder fiber (FF-2) which is pre-prepared. In this case, the OTDR unit being connected to a third input port of the first switch (SW1) within CO is connected to an optical link, where a fault occurs, through a second output port and may detect a fault state and a fault position, etc. Likewise, if a fault occurs, for example, on a first distribution fiber (DF1-1) among the plurality of first and second distribution fibers (DF1-1,DF1-2;DF2-1,DF2-2;...;DF32-1,DF32-2), a service path may be re-configured to a pre-prepared second distribution fiber (DF1-2) through switching the switching states (i.e., switching from a bar state into a cross state) of one or more corresponding third switches (SW3) in RN and one or more corresponding fourth switches (SW4) in ONTs. In this case, a path switching device provided within RN sets up an optical path so as for an OTDR monitoring signal decoupled by the second switch (SW2) to be coupled selectively to the plurality of first and second distribution fibers, and the OTDR monitoring signal connected to a different input port (i.e., a third input port (3)) of a corresponding third switch (SW3-1), which is connected to the path switching device and embodied by a 2x2 switch, is connected to the distribution fiber where the fault occurs (i.e., the first distribution fiber (DF1-1)) and detects a fault state and a fault position of the first distribution fiber (DF1-1). Herein, the path switching device may be embodied, for example, by a 1xn optical latching switch (OLS) having a latch characteristic. As described in detail above, the embodiment illustrated in Fig. 2 has a characteristic in that a wavelength band of the OTDR monitoring signal is able to detect a fault on an optical path regardless of a wavelength band for transmitting PON data.

More specifically, according to embodiments disclosed in 553 Application and 595 Application, a configuration of a powering unit for operating the second switch (SW2), a plurality of third switch (SW3-1,SW3-2,...,SW3-32), and the path switching device (1xn OLS) within RN comprises an OTDR unit, being provided within CO, for outputting a monitoring signal for monitoring an optical path; an optical powering unit, being provided within CO, for providing optical power and control information necessary for setting up the optical path regarding a self-healing function and the monitoring signal; a first WDM filter (WDM1-1), being provided at a front end of a first switch (SW1), for connecting the optical power and the control information to the first switch (SW1); a second WDM filter (WDM1-2), being provided between a first feeder fiber (FF-1) and a second switch (SW2) within RN, for coupling or decoupling the optical power and the control information selectively; a third WDM filter (WDM1-3), being provided between a second feeder fiber (FF-2) and the second switch (SW2) within RN, for coupling or decoupling the optical power and the control information selectively; a photovoltaic converter, being connected to the second WDM filter (WDM1-2) and the third WDM filter (WDM1-3) within RN, for converting the optical power and the control information into an electrical signal; a path switching device (1xn OLS), being connected to the second switch (SW2), for setting up the optical path so as to couple the monitoring signal decoupled by the second switch (SW2) selectively to a plurality of distribution fibers; a plurality of third switches (SW3) being provided between the path switching device (1xn OLS) and the plurality of distribution fibers, within RN; and a control unit, being connected to the photovoltaic converter, for providing electric power and control information necessary for operating the second switch (SW2), the plurality of third switches (SW3), and the path switching device (1xn OLS) by using the electrical signal. Herein, the optical power and the control information outputted from the optical powering unit within CO are transmitted through the first WDM filter (WDM1-1) and through the first feeder fiber (FF-1) or the second feeder fiber (FF-2), either one of which is in a normal state. After that, the transmitted optical power and the control information are decoupled through the second WDM filer (WDM1-2) or the third WDM filter (WDM1-3) within RN and are converted into the electrical signal through the photovoltaic converter.

As described in detail above, an embodiment of the present invention illustrated in Fig. 1 describes illustratively that the optical powering unit and the OTDR unit use different wavelength bands. However, setting-up an optical path regarding the OTDR monitoring signal by using the optical powering unit and detecting a fault by using the OTDR unit may be performed in sequence and, in such a case, the optical powering unit and the OTDR unit may use the same wavelength band. As an example, if the first WDM filer (WDM1-1), the second WDM filer (WDM1-2), and the third WDM filer (WDM1-3) have a wavelength response characteristic which is the same as that assigned to the optical powering unit and the OTDR unit, and if the existing fifth WDM filter (WDM2-5) is substituted by an optical coupler, it is possible to set up an optical path regarding the OTDR monitoring signal by using an optical power signal provided through one wavelength band, and detect a fault on the set-up optical path by using the OTDR monitoring signal through the set-up optical path. Further, although an embodiment shown in Fig. 1 illustrates that the OTDR unit and the optical powering unit are independent devices, i.e., each being a device having an independent light source, it is possible to configure so as to generate an optical power signal, which provides optical power including control information of RN, and an OTDR monitoring signal by using one light source. That is, it is obvious that the optical powering unit and the OTDR unit may be embodied by one integrated device.

As described in detail above, although the OTDR unit is described illustratively as a fault localization apparatus on an optical fiber, any skilled person in the art may fully understand that any device capable of detecting a fault on an optical fiber can be used as the fault localization apparatus.

As described in detail above, although it is described illustratively that the present invention includes a powering unit for re-configuring an optical path by optical power being fed temporarily through a remote control in order to operate RN effectively, any skilled person in the art may fully understand that a powering unit for providing electric power for re-configuring an optical path temporarily, i.e., a powering device capable of re-configuring an optical path temporarily by electric power being fed from outside, while PON is being regularly operated as a PON with a powerless characteristic, can be used. More specifically, although it is possible to feed electric power to RN through an optical fiber from a remote place, a powering device for providing electric power to RN more easily from outside through a different method can be used. Such kind of powering device may be used independently of or in addition to the powering unit capable of feeding optical power of the present invention as described in detail above. In this case, a network can be regularly operated as a PON with a powerless characteristic.

Accordingly, the present invention embodied by the illustrative embodiments as described in detail above is possible to provide a method or an apparatus capable of detecting a fault on an optical path regardless of a type of PON.

### Industrial Applicability

As various modifications could be made in the constructions and method herein described and illustrated without departing from the scope of the present invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended hereto and their equivalents.

## Claims

1. A fault localization method in PON comprising:
a) configuring an optical path of a remote node (RN) selectively by electric power being fed temporarily only when necessary, while the PON is regularly being operated as a passive network; and
b) detecting a fault occurring on the selectively configured optical path by inserting a monitoring signal of an OTDR unit, which is positioned in a central office (CO), through the selectively configured optical path.

2. The fault localization method of claim 1, wherein the remote place is positioned within the CO.

3. The fault localization method of claim 1, wherein the a) step is embodied by using a latch type switch having a latch characteristic.

4. The fault localization method of anyone of claims 1 to 3, wherein a wavelength band of a light source being used for outputting the monitoring signal of the OTDR unit, a wavelength band for transmitting data of the PON, and a wavelength band for the optical power are different wavelength bands.

5. A fault localization apparatus in PON comprising:
a powering unit, being provided within CO, for temporarily providing electric power and control information of RN with the RN so as to configure an optical path of the RN selectively;
an OTDR unit, being provided within the CO, for providing a monitoring signal for monitoring the optical path; a path switching device, being provided within the RN, for setting up the optical path so as for the monitoring signal to be coupled selectively to a plurality of distribution fibers; and
a control unit for setting up the optical path of the RN to the path switching device by using the electric power and the control information.

6. A fault localization apparatus in PON comprising:
a powering unit, being provided within CO, for temporarily providing optical power through an optical fiber and for providing electric power and control information of RN necessary for configuring an optical path of the RN selectively;
an OTDR unit, being provided within the CO, for providing a monitoring signal for monitoring the optical path;
a photovoltaic converter, being provided within the RN, for converting the optical power and the control information into an electrical signal;
a path switching device, being provided within the RN, for setting up the optical path so as for the monitoring signal to be coupled selectively to a plurality of distribution fibers; and
a control unit for setting up the optical path of the RN to the path switching device by using the electric power and the control information.

7. A fault localization apparatus in PON comprising:
a powering unit, being provided within CO, for outputting optical power and control information of RN to the RN so as to configure an optical path of the RN selectively;
an OTDR unit, being provided within the CO, for outputting a monitoring signal for monitoring the optical path; a first switch (switch 1) for decoupling or coupling the optical power and the control information outputted from the powering unit and the monitoring signal outputted from the OTDR unit selectively;
a first WDM filter, being provided within the CO, for decoupling or coupling the optical power, the control information, and the monitoring signal to a feeder fiber;
a second WDM filter, being provided within the RN, for decoupling or coupling the optical power, the control information, and the monitoring signal;
a path switching device, being provided within the RN, for setting up the optical path so as to couple the monitoring signal decoupled by the second WDM filter selectively to a plurality of distribution fibers;
a plurality of third WDM filters, being provided within the RN, for decoupling or coupling the monitoring signal selectively;
a fifth WDM filter, being provided within the RN, for decoupling the optical power and the control information;
a photovoltaic converter, being provided within the RN, for converting the optical power and the control information, which are decoupled through the fifth WDM filter, into an electrical signal; and
a control unit, being provided within the RN, for designating a switch-over of the optical path of the RN by using the electrical signal.

8. The fault localization apparatus of claim 7, wherein the path switching device is embodied by a latch type switch having a latch characteristic or any plurality of optical switches.

9. The fault localization apparatus of claim 7, wherein the first switch (switch 1) is embodied by a WDM filer.

10. The fault localization apparatus of claim 7, wherein the plurality of third WDM filters is embodied respectively by an optical switch.

11. The fault localization apparatus of claim 7, wherein the plurality of third WDM filters is embodied respectively by an optical coupler.

12. The fault localization apparatus of claim 7, wherein the powering unit includes
a high power laser, being provided within the CO, for providing an optical power in order to set-up the optical path of the RN; and
an encoding unit for providing the control information of the RN.

13. The fault localization apparatus of claim 12, wherein the powering unit and the OTDR unit are embodied by one integrated device.

14. The fault localization apparatus of anyone of claims 7 to 13, wherein a wavelength band of a light source being used for outputting the monitoring signal of the OTDR unit, a wavelength band for transmitting data of the PON, and a wavelength band for the electric power are different wavelength bands.

15. The fault localization apparatus of claim 12, wherein in case that setting-up the optical path regarding the monitoring signal by using the powering unit and detecting the fault by using the OTDR unit is performed in sequence, the optical powering unit and the OTDR unit use a same wavelength band.

16. A fault localization apparatus in PON comprising:
an OTDR unit, being provided within CO, for outputting a monitoring signal for monitoring an optical path;
an optical powering unit, being provided within the CO, for providing optical power and control information necessary for setting up the optical path regarding a self-healing function and the monitoring signal;
a first WDM filter, being provided at a front end of a first switch (SW1), for connecting the optical power and the control information to the first switch (SW1);
a second WDM filter, being provided between a first feeder fiber (FF-1) and a second switch within RN, for coupling or decoupling the optical power and the control information selectively;
a third WDM filter, being provided between a second feeder fiber (FF-2) and the second switch within the RN, for coupling or decoupling the optical power and the control information selectively;
a photovoltaic converter, being connected to the second WDM filter and the third WDM filter within the RN, for converting the optical power and the control information into an electrical signal;
a path switching device, being connected to the second switch, for setting up the optical path so as to couple the monitoring signal decoupled by the second switch selectively to a plurality of distribution fibers;
a plurality of third switches being provided between the path switching device and the plurality of distribution fibers within the RN; and
a control unit, being connected to the photovoltaic converter, for providing electric power and control information necessary for operating the second switch, the plurality of third switches, and the path switching device by using the electrical signal.

17. The fault localization apparatus of claim 16, wherein the path switching device is embodied by a latch type switch having a latch characteristic or any plurality of optical switches.

18. The fault localization apparatus of claim 16, wherein the powering unit includes
a high power laser, being provided within the CO, for providing an optical power in order to set-up the optical path of the RN; and
an encoding unit for providing the control information of the RN.

19. The fault localization apparatus of anyone of claims 16 to 18,
wherein a wavelength band for transmitting data of the PON and a wavelength band for the electric power are different wavelength bands, and
wherein a wavelength band of a light source being used for outputting the monitoring signal of the OTDR unit is the same as or different from the wavelength band for transmitting data of the PON or the wavelength band for the electric power.

20. A PON including a fault localization apparatus comprising:
CO including OLT, and a first WDM filter being connected to the OLT;
RN including MUX/DEMUX, a second WDM filter being connected to a front end of the MUX/DEMUX, and a plurality of third WDM filters being connected to a back end of the MUX/DEMUX;
a plurality of ONTs (ONT1,...,ONTn) being connected to the RN;
a feeder fiber for connecting the OLT and the RN; and
a plurality of distribution fibers (DF-1,...,DF-n) for connecting the RN and the plurality of ONTs (ONT1,...,ONTn),
wherein the fault localization apparatus comprises
a powering unit, being provided within the CO, for temporarily providing electric power and control information of the RN with the RN so as to configure an optical path of the RN selectively;
an OTDR unit, being provided within the CO, for providing a monitoring signal for monitoring the optical path;
a path switching device, being provided within the RN, for setting up the optical path so as for the monitoring signal to be coupled selectively to a plurality of distribution fibers; and
a control unit for setting up the optical path of the RN to the path switching device by using the electric power and the control information.

21. A PON including a fault localization apparatus comprising:
CO including OLT, and a first WDM filter being connected to the OLT;
RN including MUX/DEMUX, a second and a third WDM filters being connected selectively to a front end of the MUX/DEMUX, a second switch being connected respectively to the second and the third WDM filters, and a plurality of third WDM filters being connected to a back end of the MUX/DEMUX;
a plurality of ONTs (ONT1,...,ONTn) being connected to the RN;
a first and a second feeder fibers for connecting the OLT and the RN;
a plurality of first and second distribution fibers (DF1-1,DF1-2; DF2-1,DF2-2..., DFn-1,DFn-2) for connecting the RN and the plurality of ONTs (ONT1,...,ONTn); and
a plurality of fourth switches, being provided within the plurality of ONTs, for providing a connection to the plurality of first and second distribution fibers,
wherein the fault localization apparatus comprises
a powering unit, being provided within the CO, for temporarily providing optical power through an optical fiber and for providing electric power and control information of the RN necessary for configuring an optical path of the RN selectively;
an OTDR unit, being provided within the CO, for providing a monitoring signal for monitoring the optical path;
a photovoltaic converter, being provided within the RN, for converting the optical power and the control information into an electrical signal;
a path switching device, being provided within the RN, for setting up the optical path so as for the monitoring signal to be coupled selectively to a plurality of distribution fibers; and
a control unit for setting up the optical path of the RN to the path switching device by using the electric power and the control information.

22. A PON including a fault localization apparatus comprising:
CO including OLT, and a first WDM filter being connected to the OLT;
RN including MUX/DEMUX, a second WDM filter being connected to a front end of the MUX/DEMUX, and a plurality of third WDM filters being connected to a back end of the MUX/DEMUX;
a plurality of ONTs (ONT1,...,ONTn) being connected to the RN;
a feeder fiber for connecting the OLT and the RN; and
a plurality of distribution fibers (DF-1,...,DF-n) for connecting the RN and the plurality of ONTs (ONT1,...,ONTn),
wherein the fault localization apparatus comprises
a powering unit, being provided within the CO, for outputting optical power and control information of the RN to the RN so as to configure an optical path of the RN selectively;
an OTDR unit, being provided within the CO, for outputting a monitoring signal for monitoring the optical path; a first switch (switch 1) for decoupling or coupling the optical power and the control information outputted from the powering unit and the monitoring signal outputted from the OTDR unit selectively;
a first WDM filter, being provided within the CO, for decoupling or coupling the optical power, the control information, and the monitoring signal to the feeder fiber; a second WDM filter, being provided within the RN, for decoupling or coupling the optical power, the control information, and the monitoring signal;
a path switching device, being provided within the RN, for setting up the optical path so as to couple the monitoring signal decoupled by the second WDM filter selectively to the plurality of distribution fibers;
a plurality of third WDM filters, being provided within the RN, for decoupling or coupling the monitoring signal selectively;
a fifth WDM filter, being provided within the RN, for decoupling the optical power and the control information;
a photovoltaic converter, being provided within the RN, for converting the optical power and the control information, which are decoupled through the fifth WDM filter, into an electrical signal; and
a control unit, being provided within the RN, for designating a switch-over of the optical path of the RN by using the electrical signal.

23. The PON of claim 22, wherein the MUX/DEMUX is embodied by an optical power splitter (OPS) or an arrayed waveguide grating (AWG).

24. The PON of claim 22, wherein the path switching device is connected respectively to the plurality of third WDM filters and embodied by a latch type switch having a latch characteristic or any plurality of optical switches.

25. The PON of claim 22, wherein the powering unit includes
a high power laser, being provided within the CO, for providing an optical power in order to set-up the optical path of the RN; and
an encoding unit for providing the control information of the RN.

26. The PON of claim 25, wherein the powering unit and the OTDR unit are embodied by one integrated device.

27. The PON of anyone of claims 22 to 26, wherein a wavelength band of a light source being used for outputting the monitoring signal of the OTDR unit, a wavelength band for transmitting data of the PON, and a wavelength band for the electric power are different wavelength bands.

28. The PON of claim 25, wherein in case that setting-up the optical path regarding the monitoring signal by using the powering unit and detecting the fault by using the OTDR unit is performed in sequence, the optical powering unit and the OTDR unit use a same wavelength band.

29. The PON of anyone of claims 22 to 26, wherein the PON is either one of a TDM-PON, a WDM-PON, and a subscriber network configuration where WDM-PON services and TDM-PON services are co-existing.

30. A PON including a fault localization apparatus comprising:
CO including OLT, a first WDM filter being connected to the OLT, and a first switch being connected to the first WDM filter;
RN including MUX/DEMUX, a second and a third WDM filters being connected selectively to a front end of the MUX/DEMUX, a second switch being connected respectively to the second and the third WDM filters, and a plurality of third WDM filters being connected to a back end of the MUX/DEMUX;
a plurality of ONTs (ONT1,...,ONTn) being connected to the RN; a first and a second feeder fibers for connecting the OLT and the RN;
a plurality of first and second distribution fibers (DF1-1,DF1-2; DF2-1,DF2-2..., DFn-1,DFn-2) for connecting the RN and the plurality of ONTs (ONT1,...,ONTn); and
a plurality of fourth switches, being provided within the plurality of ONTs, for providing a connection to the plurality of first and second distribution fibers,
wherein the fault localization apparatus comprises
an OTDR unit, being provided within the CO, for outputting a monitoring signal for monitoring an optical path;
an optical powering unit, being provided within the CO, for providing optical power and control information necessary for setting up the optical path regarding a self-healing function and the monitoring signal;
a first WDM filter, being provided at a front end of a first switch (SW1), for connecting the optical power and the control information to the first switch (SW1);
a second WDM filter, being provided between the first feeder fiber (FF-1) and a second switch within the RN, for coupling or decoupling the optical power and the control information selectively;
a third WDM filter, being provided between the second feeder fiber (FF-2) and the second switch within the RN, for coupling or decoupling the optical power and the control information selectively;
a photovoltaic converter, being connected to the second WDM filter and the third WDM filter within the RN, for converting the optical power and the control information into an electrical signal;
a path switching device, being connected to the second switch, for setting up the optical path so as to couple the monitoring signal decoupled by the second switch selectively to the plurality of first and second distribution fibers;
a plurality of third switches being provided between the path switching device and the plurality of first and second distribution fibers within the RN; and
a control unit, being connected to the photovoltaic converter, for providing electric power and control information necessary for operating the second switch, the third switch, and the path switching device by using the electrical signal.

31. The PON of claim 30, wherein the path switching device is connected respectively to the plurality of third WDM filters and embodied by a latch type switch having a latch characteristic or any plurality of optical switches.

32. The PON of claim 30, wherein the powering unit includes
a high power laser, being provided within the CO, for providing an optical power in order to set-up the optical path of the RN; and
an encoding unit for providing the control information of the RN.

33. The PON of anyone of claims 30 to 32,
wherein a wavelength band for transmitting data of the PON and a wavelength band for the electric power are different wavelength bands, and
wherein a wavelength band of a light source being used for outputting the monitoring signal of the OTDR unit is the same as or different from the wavelength band for transmitting data of the PON or the wavelength band for the electric power.

34. The PON anyone of claims 30 to 32, wherein the PON is either one of a TDM-PON, a WDM-PON, and a subscriber network configuration where WDM-PON services and TDM-PON services are co-existing.
